# EUROPÄISCHE PATENTANMELDUNG

(11) **EP 2 410 099 A2**
(43) Veröffentlichungstag der Anmeldung: **25.01.2012**
(21) Anmeldenummer: 11005741.1
(22) Anmeldetag: 14.07.2011
(51) Int. Cl.: E04B 1/80

(54) **Akustikplatte**

(30) Priorität: 20.07.2010 DE 102010031825
(71) Anmelder: Erfurt & Sohn KG, 42399 Wuppertal (DE)
(72) Erfinder: Klix, Jürgen, Dr., 42399 Wuppertal (DE)
(74) Vertreter: Cohausz Hannig Borkowski Wißgott

(57) **Zusammenfassung**

Die Erfindung betrifft eine Akustikplatte mit mindestens zwei Schichten, wobei eine Schicht eine Hohlraumstruktur, insbesondere aus Kunststoff aufweist und die Vorderseite mit einer Filzschicht bedeckt ist.

## Beschreibung

Die Erfindung betrifft eine Akustikplatte mit mindestens zwei Schichten, insbesondere zum Anbringen an Innenwänden eines Gebäudes.

Für Räume werden aus verschiedensten Gründen, insbesondere aus Gründen der Behaglichkeit für den Aufenthalt, für Sprachdarbietungen, für Musikdarbietungen und zur Raumschallpegelminderung, Schallabsorber benötigt.

Schallabsorber sind im einfachsten Fall schon Bodenbeläge aus Teppichen, Vorhänge u. ä., welche im Allgemeinen und insbesonderen in hohen Frequenzbereichen bedeutende Schallabsorptionswerte aufweisen sowie Schränke, welche insbesondere in den tiefen Frequenzbereichen bedeutende Schallabsorptionswerte herstellen.

Eine minimale Schallabsorption kommt auch schon durch Tapeten u.a. zustande, was allerdings nur gegenüber einem zuvor halligen Raum spürbar wird. Die ansonsten angebotenen speziellen Schallabsorber zeichnen sich dadurch aus, dass diese in der Regel mechanisch empfindlich sind und praktisch nur für den Deckenbereich und ggf. oberhalb von 2 m an Wänden angebracht werden können, oder es sind auch Wandabsorber, wie z.B. Röhrenspanplatten, Lochbleche, Gittersteine u. ä., in der Regel in Kombination mit dahinter angebrachten porösen Schallabsorbern (Mineralfaserplatten, offenzellige Schaumkunststoffe o.ä.), auf dem Markt erhältlich.

Bei den angebotenen Wandabsorbern sind die Probleme gegeben, dass typischerweise das Wanderscheinungsbild stark beeinflusst wird, unansehnliche

Beschädigungen und auch Verletzungsgefahren (für Finger) möglich sind, die Luftschalldämmung der Wand verringert werden kann und weiterhin kann z.B. auch das Hineinstopfen von Abfällen in Schlitzen und Löchern beobachtet werden. All dies führt dazu, dass die derzeit angebotenen Wandabsorber nicht gerne verwendet werden.

Aufgabe der Erfindung ist es, einzelne Akustikplatten zu schaffen, die bei hoher Schallabsorption einfach an Wänden befestigbar sind, mechanisch unempfindlich sind und dekorativ verwendbar, insbesondere mit einem Farbanstrich und/oder einer Tapete bedeckbar sind.

Diese Aufgabe wird erfindungsgemäß dadurch gelöst, dass zumindest eine der wenigstens zwei Schichten eine Hohlraumstruktur, bevorzugt eine Wabenstruktur insbesondere aus Kunststoff aufweist und dass zumindest die Vorderseite einer solchen Akustikplatte mit einer Filzschicht bedeckt ist.

Eine solche Vorderseite kann dabei bevorzugt durch die vorderseitige Ebene der Schicht gebildet sein, welche die Hohlraumstruktur umfasst. Dabei können die Hohlräume, bevorzugt die Waben innerhalb dieser Schicht zur Vorder- und/oder Rückseite hin offen sein, insbesondere so, dass sich eine geschlossene Hohlraumstruktur erst durch eine vorder- und/oder rückseitig daran angeordnete Filzschicht oder Vliesschicht ergibt.

Die vorderseitige Filzschicht hat folgende Aufgaben:
- sie schützt die Hohlräume, bevorzugt die wabenförmigen Räume gegen Schmutz und das Eindringen von Gegenständen;
- sie wirkt teilweise schallabsorbierend und lässt teilweise Schall zu den Hohlräumen im Inneren, insbesondere zu den wabenförmigen Innenräumen hindurch, damit der Schall dort absorbiert wird;
- sie bildet eine glatte Wandoberfläche, die gestrichen und/oder mit Tapete versehen werden kann.

Die Hohlräume können in einer anderen Ausführung innerhalb der Schicht auch vorder- und/oder rückseitig mit demselben Material verschlossen sein, welches auch die Seitenwände ausbildet, die bevorzugt unter 90° zur Vorder- und Rückseite orientiert sind. Auch in diesem Fall kann vorder- und/oder rückseitig eine Filz- bzw. Vliesschicht daran angeordnet sein.

Sofern die Hohlraumwände der Hohlraumschicht z.B. durch Prägung einer Platte entstanden sind, kann es auch vorgesehen sein, dass die Hohlräumwände, die in der Schichtebene die Hohlräume umgrenzen, unter anderen Winkeln als 90 ° zur Vorder-und/oder Rückseite orientiert sind.

In einer Weiterbildung können auch mehr als eine Hohlraumschicht innerhalb einer Akustikplatte angeordnet sein, insbesondere wobei solche Schichten parallel zueinander angeordnet sind und benachbart sind oder zueinander beabstandet sind.

Um die Platten einfach und sicher an einer Wand zu befestigen, insbesondere ankleben zu können wird vorgeschlagen, dass die Rückseite der Akustikplatte, bevorzugt unmittelbar die Rückseite der Hohlraumschicht mit einem Vlies, Filz und/oder Papier und/oder Glasvlies bedeckt ist.

Die Plattenvorderseite und damit die Filzaußenseite ist noch besser überarbeitbar, insbesondere streichbar und/oder tapezierbar, wenn die Filzschicht der Vorderseite mit einem Papier oder Papiervlies und/oder Glasvlies außenseitig bedeckt ist.

Eine einfache Produktion und eine hohe Feuchtigkeitsresistenz werden erreicht, wenn die gesamte Hohlraumstruktur oder die Wände zwischen den Hohlräumen aus Kunststofffolie, insbesondere aus Polyesterfolie bestehen. Alternativ können die Hohlraumstruktur insbesondere zumindest die Wände aber auch aus Papier oder Pappe oder Karton oder aus einem Nadelfilz bestehen, wobei der Nadelfilz vorzugsweist mit Harz getränkt ist, um eine größere Steifigkeit der Platte zu erreichen.

In einer Weiterbildung ist vorgesehen, dass das Innere der Hohlräume in der genannten Schicht mit einem schallabsorbierenden oder auch wärmedämmenden/feuerhemmenden Material gefüllt ist, wie z.B. mit offenzelligem Schaumstoff oder einem Fasermaterial, z.B. Glas- oder Mineralfaser, oder anorganischen Füllstoffen.

In bevorzugter Ausführung sind die Akustikplatten in sich steif und selbsttragend ausgebildet.

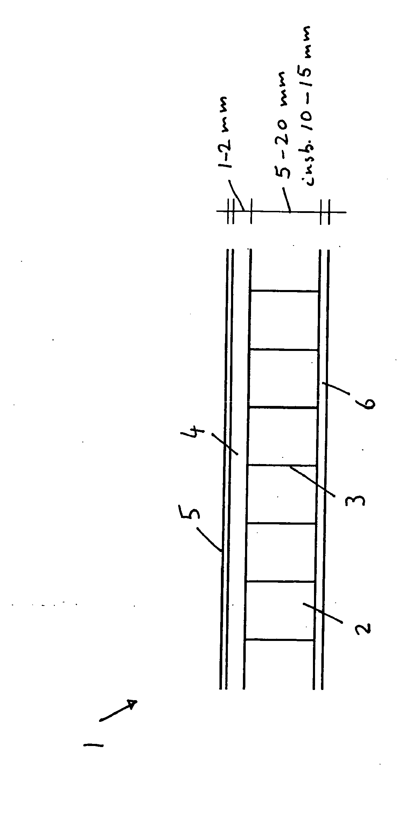

Ein Ausführungsbeispiel der Erfindung ist in der Zeichnung im Querschnitt schematisch dargestellt und wird im Folgenden näher beschrieben.

Die Akustikplatte 1 weist beispielsweise eine Länge von 120 cm und eine Breite von 80 cm auf und besitzt eine Hohlraumschicht 2, die z.B. als Wabenschicht 2 ausgebildet sein kann, z.B. mit einer Dicke von 4 ― 20 mm, insbesondere von 6 ― 12 mm. Hierbei stehen die Hohlraumwände 3, bevorzugt die Wabenwände 3 im Winkel von 90° zur Vorder- und Rückseite der Platte 1. Die Hohlraumschicht und damit deren Deckschichten und/oder deren Hohlraumwände (Wabenwände 3) bestehen aus einer Kunststoff-Folie, z.B. Polyesterfolie oder aus Papier, Pappe, Karton oder einem Nadelfilz, der vorzugsweise mit einem Harz getränkt ist, um eine größere Steifigkeit zu erlangen, nachdem der Harz ausgehärtet ist.

Auf der Vorderseite ist die Hohlraumschicht durch eine Filzschicht 4 bedeckt z.B. mit 1 bis 2 mm Dicke, die vorzugsweise ein Nadelfilz ist, aus Kunststoff- und/oder natürlichen Fasern, wobei diese Filzschicht bevorzugt die gesamte Platte bis zu ihren Rändern bedeckt. Bevorzugt weist diese Filzschicht keine größeren Öffnungen auf.

In einer Alternative ist die Filzschicht 4 außen von einem dimensionsstabilen und nassfesten Papier, Glasvlies oder Papiervlies 5 bedeckt.

Die Rückseite der Hohlraum-, bevorzugt Wabenschicht 2 ist mit einem Vlies oder Filz 6 oder einem Papier oder Glasvlies 6 ganzflächig bedeckt.

Es wurde somit ein neuartiger Wandabsorber entwickelt, welcher sich durch folgende Merkmale auszeichnet. Es handelt sich um plattenförmige Elemente, welche im Regelfall an die Wände angeklebt werden und aus folgenden Schichten bestehen. Die Hohlraumschicht 2 besteht aus einer insbesondere mehr oder weniger dicken (i.d.R. 0,4... 2 cm) Hohlraumstruktur, insbesondere Wabenstruktur oder ähnlichem, welche aus Folien (Kunststoffe, dünne Pappen, Papier, Karton, Nadelfilz o. ä.) geprägt, verklebt oder verschweißt hergestellt werden (bevorzugt vergleichbar mit einer Wabenstruktur wie z.B. Bienenwaben), wobei bevorzugt über dem Plattenquerschnitt sowie ggf. zwischen den einzelnen Hohlräumen (d.h. in Längsrichtung) ein geringer Wasserdampfdiffusionswiderstand hergestellt wird, bzw. hergestellt werden kann - z.B. auch durch die vorherige Perforierung der verwendeten Folien.

Die dargestellte Hohlraumplatte 1 erhält raumseitig eine Deckschicht 4, bevorzugt aus einer Filzschicht und einer weiteren Deckschicht 5, welche im Regelfall so konzipiert ist, dass weitere Beschichtungen, wie Anstriche, Tapeten u. ä. aufgebracht werden können.

Vorteile dieser Wandakustikpiatte sind:
- die Herstellung eines hochwirksamen Schallabsorbers, welcher als solcher nicht erkennbar ist und das normale Wanderscheinungsbild erhalten kann oder auch verschiedene Gestaltungsmöglichkeiten (auch späterhin, z.B. bei Raumneugestaltung) zulässt;
- z.B. in Gebäuden mit Decken-Betonkerntemperierung wird eine sinnvolle Schallabsorberanordnung möglich;
- die preiswerte Herstellungsmöglichkeit;
- insbesondere im mittleren (um 500 Hz) und tieferen Frequenzbereich kann eine hohe Schallabsorption hergestellt werden und es ist bedingt durch die Konstruktionsweise gegeben bzw. möglich, die oft weniger brauchbare Schallabsorption in höheren Frequenzbereichen zu unterdrücken;
- die oben beschriebene Schallabsorberplatte ist im eingebauten Zustand mechanisch sehr unempfindlich und bei evtl. dennoch auftretenden Beschädigungen können durch Verspachtelung oder durch den Austausch von Platten relativ einfache Sanierungen erfolgen;
- durch die Herstellung einer entsprechenden Wasserdampfdurchlässigkeit, sowohl in Richtung des Querschnittes als auch ggf. in Längsrichtung, kann auch in Bereichen mit gewissen Wandfeuchteverhältnissen ein problemloser Einbau erfolgen;
- der Massivbaucharakter der behandelten Wand kann erhalten werden, d.h. sowohl visuell wie auch beim Beschlagen der Wand muss nicht der Eindruck von Leichtkonstruktion auftreten;
- durch die Verringerung der Wärmespeichermasse im oberflächennahen Bereich wird die oben beschriebene Platte als "Raumheizbeschleuniger", d.h. ähnlich wie mit einer Membran wird ein gewisser Temperaturteiler zwischen dem Raum und der dahinter befindlichen Wand hergestellt, mit entsprechenden Vorteilen für die solare Energienutzung und für die rasche Herstellung von thermischer Behaglichkeit in der Heizperiode und ggf. auch bei der Raumkühlung.

Somit entsteht ein plattenförmiger Schallabsorber mit geringem Gewicht, welcher bevorzugt auf Wände aufgeklebt wird und auf mechanische Beanspruchungen besonders unempfindlich reagiert sowie das Erscheinungsbild der Wände nicht verändert, bzw. sehr vielfältige Oberflächengestaltungen ermöglicht und zudem sehr kostengünstig hergestellt werden kann, so dass eine im Allgemeinen praktisch sehr nützliche Schallabsorption im mittleren (um 500 Hz) und ggf. auch tieferfrequenten Bereich (< 500 Hz) hergestellt wird.

Mittels einer entsprechend großen Wasserdampfdurchlässigkeit in Quer- und ggf. auch in Längsrichtung der Platte können auch durch gewisse Feuchtebelastungen problematischere Wände verkleidet werden.

Durch die geringe raumseitige Masse (Deckschichten aus Filz o.ä.) können bei einer entsprechenden Auslegung, abhängig von der Raumsituation, die Raumanheizbarkeit wesentlich verbessert werden und auch die solaren Gewinne in der Heizperiode günstig genutzt werden. Ferner kann durch die geringe raumseitige Masse (Deckschichten aus Filz o.ä.) bei einer entsprechend Auslegung abhängig von der Raumsituation. die Raumkühlung wesentlich effektiver betrieben werden, d.h. mit einem geringeren Energieaufwand.

Seine Anordnung hinter Heizkörpern bietet die Vorteile der Raschen und der damit wirksameren Beeinflussung der Raumanheizung und auch die Verminderung der Wärmeverluste in die weniger nützliche Anheizung massiver Innen- oder Außenbauteile in Heizkörpernähe, welche bei den in der Regel sehr intermittierenden Beheizungsphasen sehr effektiv werden kann. Bei groß bemessenen Heizkörpern werden die Betriebszeiten kurz und damit die Wirksamkeit eines Temperaturteilers hinter dem Heizkörper sehr bedeutend.

## Patentansprüche

1. Akustikplatte (1) mit mindestens zwei Schichten (2, 4), insbesondere für die Anbringung an Wänden, **dadurch gekennzeichnet, dass** eine Schicht (2) eine Hohlraumstruktur, insbesondere aus Kunststoff aufweist, und dass zumindest die Vorderseite mit einer Filzschicht (4) bedeckt ist.

2. Akustikplatte nach Anspruch 1, **dadurch gekennzeichnet, dass** die Rückseite mit einem Vlies, Filz (6) und/oder Papier oder Glasvlies bedeckt ist.

3. Akustikplatte nach Anspruch 1, **dadurch gekennzeichnet, dass** die Filzschicht (4) der Vorderseite mit einem Papier (5) oder Papiervlies (5) oder Glasvlies (5) außenseitig bedeckt ist.

4. Akustikplatte nach einem der vorherigen Ansprüche, **dadurch gekennzeichnet, dass** die die Hohlraumstruktur bildende Schicht insbesondere deren Deckschichten und/oder deren Hohlraumwände (3) aus Kunststofffolie, insbesondere aus Polyester oder aus einem Nadelfilz bestehen.

5. Akustikplatte nach Anspruch 4, **dadurch gekennzeichnet, dass** der Nadelfilz mit einem Harz getränkt ist.

6. Akustikplatte nach einem der vorherigen Ansprüche, **dadurch gekennzeichnet, dass** die Hohlräume als Waben ausgebildet sind.

7. Akustikplatte nach einem der vorherigen Ansprüche, **dadurch gekennzeichnet, dass** die Hohlräume innerhalb der Schicht, insbesondere die Waben zur Vorder- und/oder Rückseite hin offen sind.

8. Akustikplatte nach einem der vorherigen Ansprüche, **dadurch gekennzeichnet, dass** die Hohlraumwände (3) rechtwinklig zur Vorder-und Rückseite angeordnet sind.
